Europäisches Patentamt

European Patent Office

Office européen des brevets

(19)

(11) Numéro de publication: **0 332 541**
A2

# (12) DEMANDE DE BREVET EUROPEEN

(21) Numéro de dépôt: **89400863.0**

(22) Date de dépôt: **08.03.89**

(51) Int. Cl.⁴: **C 04 B 35/60**
C 04 B 35/10; C 09 K 3/14

(30) Priorité: **11.03.88 FR 8803415**

(43) Date de publication de la demande:
**13.09.89 Bulletin 89/37**

(84) Etats contractants désignés: **ES**

(71) Demandeur: **PECHINEY ELECTROMETALLURGIE
Tour Manhattan La Défense 2-5, 6 place de l'Iris
F-92400 Courbevoie (FR)**

(72) Inventeur: **Dubots, Dominique
65, rue des Alpes Passy-Chedde
F-74190 le Fayet (FR)**

**Toulouse, Pierre
140, chemin du Liapet
F-74400 Chamonix (FR)**

(74) Mandataire: **Vanlaer, Marcel et al
PECHINEY 28, rue de Bonnel
F-69433 Lyon Cédex 3 (FR)**

(54) Matériau électrofondu polyphase à base d'alumine, d'oxycarbure et d'oxynitrure d'aluminium.

(57) L'invention concerne un matériau polyphasé, à base d'alumine, constitué par une matrice de corindon dans laquelle sont dispersées, de façon homogène, des phases microcristallines d'oxycarbure d'aluminium, d'oxynitrure d'aluminium et d'oxycarbonitrure d'aluminium.

La teneur en carbone combiné est comprise entre 0,05 et 5% et, en azote combiné, de 0,05 à 5% en poids.

Ce matériau peut être obtenu par injection contrôlée de carbone et d'azote dans un bain d'alumine fondue.

Application à des produits abrasifs et à des produits réfractaires à hautes performances.

EP 0 332 541 A2

Description

# MATERIAU ELECTROFONDU POLYPHASE A BASE D'ALUMINE, D'OXYCARBURE ET D'OXYNITRURE D'ALUMINIUM

## DOMAINE TECHNIQUE DE L'INVENTION

La présente invention concerne un nouveau matériau polyphasé à base d'alumine, d'oxycarbure et d'oxynitrure d'aluminium; elle concerne également le procédé de préparation de ce type de matériau ainsi que ses applications dans le domaine des réfractaires et des abrasifs.

## ETAT DE LA TECHNIQUE

Les réfractaires et les abrasifs à base d'alumine électrofondue (corindon) sont bien connus. Cependant, ces produits ne répondent pas à toutes les exigences des utilisateurs, et l'on a cherché, depuis de nombreuses années à les améliorer. Il est connu (brevet FR 1308862 = US 3181939) que l'addition de 10 à 60 % d'oxyde de zirconium confère au corindon des propriétés abrasives sensiblement améliorées, mais le prix de la zircone en réserve l'usage à des applications particulières.

Dans notre brevet FR 2460315 (= US 4341533), nous avons décrit une nouvelle classe d'abrasifs à base d'alumine et d'oxycarbures d'aluminium ($Al_4O_4C$ et $Al_2OC$), obtenue par traitement d'alumine fondue avec un réducteur carboné, et refroidissement à vitesse contrôlée. Ces produits peuvent également être utilisés comme réfractaires en sidérurgie.

A l'heure actuelle, il existe une demande pour de nouveaux types de réfractaires et d'abrasifs réunissant des qualités parfois contradictoires : prix modéré, propriétés abrasives égales ou supérieures à celles du corindon-zircone, stabilité des phases, résistance aux chocs thermiques, à l'usure, à la corrosion, mouillabilité par les métaux et laitiers métallurgiques, résistance aux métaux alcalins.

## OBJET DE L'INVENTION

Un premier objet de l'invention est une nouvelle classe de matériaux électrofondus, polyphasés, à base d'alumine, caractérisés en ce qu'ils ont une teneur en carbone combiné comprise entre 0,05 et 5% et une teneur en azote combiné comprise entre 0,05 et 5%, ces teneurs étant, de préférence comprises entre 1 et 4 %. Ces matériaux se caractérisent en outre par une structure cristalline fine (obtenue par refroidissement rapide) et par la présence des phases suivantes : alumine ($Al_2O_3$, oxynitrure d'aluminium (AlON), oxycarbures d'aluminium ($Al_4O_4C$, $Al_2OC$) et oxycarbonitrure d'aluminium ($Al_x C_y N_z O_t$), dispersées de façon homogène dans une matrice de corindon.

Un second objet de l'invention est un procédé de préparation de ces nouveaux matériaux, caractérisé en ce que l'on procède à une électrofusion d'alumine pure, ou à une électrofusion réductrice d'un composé à base d'alumine tel que la bauxite, cette fusion étant le plus généralement effectuée dans un four à arc électrique polyphasé, et en ce que l'on procède à un apport de réducteur carboné et d'azote en quantités prédéterminées et en ce que l'on refroidit très rapidement le produit de réaction fondu. Le produit refroidi est ensuite broyé et calibré en fonction des usages prévus.

Un troisième objet de l'invention est l'application de ces matériaux comme abrasifs à hautes performances.

Un quatrième objet de l'invention est l'application de ces matériaux comme réfractaires, notamment dans les industries métallurgiques.

## DESCRIPTION DE L'INVENTION

Nous décrirons tout d'abord le procédé de préparation des matériaux objets de l'invention.

On a opéré dans un four à arc électrique triphasé, d'une puissance maximale de 170 kVA, d'une capacité d'environ 100 kg de produit électrofondu. Le bain fondu d'alumine peut être obtenu par fusion d'alumine pure dans le four à arc lui-même, ou par fusion réductrice de bauxite, le réducteur étant un produit carboné tel que le coke en quantité calculée de façon à réduire les oxydes autres que l'alumine, et notamment, les oxydes de fer, de silicium, de titane, à l'état de métal qui décante au fond du four sous forme d'un alliage Fe-Si-Ti.

Les électrodes carbonées sont creuses de façon à pouvoir injecter de l'azote dans l'arc. Le réducteur carboné choisi est du coke peu réactif (on pourrait aussi utiliser des morceaux de graphite) de façon qu'il ne soit pas oxydé trop rapidement à la surface de la charge, car la réaction doit s'effectuer en surface pour éviter tout risque de débordement par le moussage que provoquerait la formation d'oxyde de carbone au sein du bain d'alumine fondue. Il est également possible d'introduire le carbone sous forme d'un composé tel que le carbure d'aluminium $Al_4C_3$.

L'introduction d'azote peut s'effectuer au travers des électrodes creuses, ou encore par une canne à injecter introduite dans l'alumine fondue ou encore par introduction dans le bain d'un composé nitruré tel que le nitrure d'aluminium AlN.

L'introduction simultanée de carbone et d'azote pourrait être envisagée par l'utilisation de dérivés cyanurés, mais leur toxicité oblige à les exclure en milieu industriel.

Exemples de mise en oeuvre

Dans un premier essai, on a fondu 100 kg d'alumine et on a ajouté 9 kg de coke, et 60 m³ d'azote injectés au travers des trois électrodes creuses. Après passage de 620kWh, on a récupéré par coulée 60 kg d'un produit contenant 1,2% d'azote et 1,2% de carbone. Le mauvais rendement de récupération du produit est dû uniquement à la faible dimension du four électrique.

Dans un second essai, effectué dans les mêmes conditions, mais avec une quantité double de coke (18 kg), on a obtenu un produit titrant 3% de carbone et 2% d'azote, confirmant ainsi ce qu'avaient montré des essais à petite échelle, c'est-à-dire que l'injection simultanée d'azote et de carbone augmente très sensiblement le rendement de réaction sur l'alumine de chacun de ces réactifs. En l'absence de carbone, l'absorption d'azote est pratiquement nulle.

Dans les différents cas, les produits électrofondus ont été coulés de façon à obtenir un refroidissement rapide, en utilisant l'un des procédés suivants :
- coulée dans une poche remplie de boulets en acier de quelques centimètres de diamètre, selon notre brevet FR 2127231
- coulée en couche mince dans une lingotière à parois épaisses ou sur une plaque métallique épaisse
- coulée entre cylindres refroidis, d'axe horizontal, et distants de quelques millimètres, selon notre brevet FR 2499061 (=EP 57651).

Par ces procédés, la vitesse de refroidissement est au moins égale à 50°C par minute et peut très largement dépasser 100°C par minute, notamment par la coulée entre cylindres refroidis.
Ce refroidissement rapide confère aux produits une structure polyphasée et une grande finesse de grain, qualités indispensables pour les applications prévues. Cette microstructure se traduit, à l'examen microscopique de sections polies, par l'observation de monocristaux de dimensions inférieures à 100 µm, correspondant aux diverses phases citées, noyés dans une matrice dont le constituant principal est du corindon. Cette microstructure confère aux agrégats l'homogénéité chimique à l'échelle du millimètre, une excellente résistance aux chocs mécaniques et/ou thermiques, du fait qu'il s'agit d'une microstructure composite polyphasée.

L'analyse diffractométrique aux rayons X révèle les phases suivantes :
- corindon (en majorité)
- oxycarbure d'aluminium $Al_2OC$ (cette phase étant pratiquement la seule présente, avec quasi-absence d'$Al_4O_4C$)
- oxynitrure d'aluminium AlON
- oxycarbonitrures d'aluminium ($Al_x C_y N_z O_t$ .

Evaluation des propriétés abrasives des produits

Pour évaluer les propriétés abrasives de cette famille de produits, nous avons utilisé le test décrit par C.RAGON et H.FORESTIER dans "Mémoires scientifiques de la Revue de Métallurgie", n° 1, 1973, p. 53-59. Ces tests ont été effectués avec trois produits selon l'invention. Ils se caractérisent par les compositions suivantes :

| | Azote : (% en poids) | carbone |
|---|---|---|
| Produit n° 1 | 1,1 | 1,2 |
| Produit n° 2 | 1,9 | 2,5 |
| Produit n° 3 | 2,4 | 3,2 |

Les nuances d'acier utilisées lors de ces tests abrasifs sont XC38 (acier à 0,40% de carbone) et Z10CFI7 (acier inoxydable, ferritique, à 0,09% de carbone, 0,30% de soufre et 17% de chrome).
Les performances obtenues lors des tests sont exprimées sous forme d'un coefficient λ caractérisant le pouvoir abrasif. Ce coefficient, qui est un rapport : volume (de matériau enlevé)/surface (de la face d'usure de l'outil abrasif) est exprimé en millimètres.

Les résultats figurant dans le tableau ci-après permettent de comparer les trois produits selon l'invention à deux produits classiques : la bauxite frittée et le corindon-zircone à 25% de ZrO2.

| | Coefficient d'abrasion (en mm) | |
|---|---|---|
| | sur XC38 | sur Z10CF17 |
| Produit n° 1 | 4300 | 3200 |
| Produit n° 2 | 7500 | 3900 |
| Produit n° 3 | 5600 | 4200 |
| Bauxite frittée | 6 | 30 |
| Corindon-zircone | 800 | 250 |

Les produits objets de l'invention se révèlent donc très supérieurs aux abrasifs classiques, leur coefficient λ , sur acier XC38 étant au moins égal à 4000. En outre, il est possible d'optimiser le couple abrasif-objet abrasé en sélectionnant la composition chimique (teneur en C et N) en fonction du matériau à usiner par la mise en oeuvre des tests ci-dessus.

Evaluation des propriétés réfractaires

Les produits objets de l'invention ont également été testés pour évaluer leurs propriétés réfractaires. Pour cela, des éprouvettes ayant les dimensions de briques réfractaires standards (par exemple 220x110x60 mm) ont été fabriquées à partir d'un agrégat obtenu par broyage du produit et classification granulométrique suivant une distribution de FULLER BOLOMEY (100% < 5 mm). Cet agrégat, mélangé à 1,5% d'une résine thermodurcissable du type "Bakélite" ont été mis en forme à la presse, puis cuits en atmosphère non-oxydante en montant lentement jusqu'à 1500°C de façon à créer des liaisons céramiques.

A partir de ces éprouvettes fabriquées avec les mêmes produits 1,2,3 précédemment cités, et de témoins en corindon blanc et en corindon brun, on a procédé à des tests comparatifs pour évaluer les propriétés réfractaires et la tenue à la corrosion par de la fonte liquide et des laitiers.
Les briques-éprouvettes ont été insérées dans le garnissage d'une cuve tournante équipant un four d'essai, à arc électrique triphasé.
Après fusion de la fonte et d'un laitier d'accompagnement, les éprouvettes ont été extraites du garnissage, mesurées et examinées. L'examen comparatif du faciès de corrosion a permis d'établir un indice de corrosion semi-quantitatif dans lequel interviennent :
- la dégradation mécanique due à la dissolution du réfractaire par les phases agressives contenues dans le four
- la dégradation mécanique des éprouvettes due au choc thermique
- le faciès de corrosion aux interfaces (fonte-laitier, laitier-atmosphère).

En prenant comme référence le corindon blanc, on obtient les valeurs suivantes:

Indice de corrosion

| | |
|---|---|
| Produit n° 1 | 83 |
| Produit n° 2 | 51 |
| Produit n° 3 | 48 |
| Corindon brun | 121 |
| Corindon blanc | 100 |

Sachant que la résistance à la corrosion est d'autant meilleure que la perte de poids par dissolution est faible -donc que la valeur de l'indice est basse- il apparaît nettement que les produits selon l'invention présentent des qualités de résistance à la corrosion nettement supérieures à celles des meilleurs produits réfractaires actuellement sur le marché. Cette résistance apparaît comme une fonction de la teneur en carbone et azote : on peut donc l'ajuster en fonction des besoins lors de l'élaboration du produit.

La résistance à la corrosion chimique n'est pas la seule qualité que l'on attend d'un réfractaire : il doit également conserver de bonnes caractéristiques mécaniques à chaud. Pour tester le comportement au fluage sous charge, à haute température, et sous atmosphère non-oxydante, on a opéré sur des éprouvettes cylindriques prélevées dans les briques fabriquées avec les produits selon l'invention, comme on l'a indiqué précédemment. Ces tests ont permis de déterminer une température de fluage commençant pour chaque produit. Les résultats sont les suivants :

| | |
|---|---|
| produit n° 1 | 1760°C |
| produit n° 2 | 1720°C |
| produit n° 3 | 1680°C |
| corindon brun | 1690°C |

Il est clair que les qualités de résistance à la corrosion ne sont pas obtenues au détriment de la résistance mécanique à chaud, puisque les produits selon l'invention sont équivalents ou supérieurs au corindon brun couramment utilisé. On note que les caractéristiques à chaud diminuent progressivement lorsque la teneur en C et N augmente.
En service, un réfractaire est également soumis à des chocs thermiques importants. Pour cette raison, on a également effectué des tests de résistance au choc thermique sur les produits objets de l'invention.
On a préparé 100 grammes d'agrégat de chacun des produits réfractaires 1,2 et 3 tels que précédemment définis, et des produits comparatifs, corindon brun et blanc, ayant une graulométrie entre 4 et 7 mm. Les produits ont été portés 15 min à 1500°C puis jetés dans une grande masse d'eau à environ 20°C. Après étuvage, les produits sont tamisés sur un tamis de 4 mm d'ouverture de maille, et le refus a été pesé avant de subir un nouveau cycle de choc thermique identique au précédent. La proportion de refus au tamis de 4 mm après n chocs thermiques caractérise chaque produit : plus cette proportion est élevée, meilleure est la résistance au choc thermique.
En prenant comme référence le corindon blanc, après 5 cycles thermiques, on a obtenu les résultats suivants :

| | |
|---|---|
| produit n° 1 | 3,1 |
| produit n° 2 | 3,9 |
| produit n° 3 | 3,8 |
| corindon brun | 2,7 |
| corindon brun | 1,00 |

De ce fait, il ressort que les produits selon l'invention présentent une résistance au choc thermique très supérieure à celle des produits classiques à base d'alumine et que l'optimum correspond au produit n° 2 à 2,5% de carbone et 1,9% d'azote.

## CONCLUSION

Il apparaît ainsi que les produits, objets de l'invention, présentent une association remarquable de propriétés abrasives et des propriétés réfractaires, liées à leur teneur en azote et en carbone, ces propriétés pouvant, en outre, être ajustées à l'usage envisagé, en jouant sur la teneur en azote et carbone au moment de l'élaboration du produit. Pour l'usage comme réfractaire, en particulier pour l'élaboration et le traitement des fontes, ils supplantent la plupart des réfractaires actuellement en service.
Pour l'usage comme abrasifs, ils présentent également un ensemble de propriétés qui les mettent en concurrence avec les meilleurs abrasifs industriels actuels notamment les corindon-zircone.

## Revendications

1. Matériau polyphasé, à base d'alumine, caractérisé en ce qu'il a une teneur en carbone combiné comprise entre 0,05 et 5% et une teneur en azote combiné comprise entre 0,05 et 5%.

2. Matériau, selon revendication 1, caractérisé en ce que la teneur en carbone combiné est comprise, de préférence entre 1 et 4% et la teneur en azote combiné est comprise entre 1 et 4%.

3. Matériau selon revendication 1 ou 2, caractérisé en ce qu'il est constitué par une matrice de corindon dans laquelle sont dispersées de façon homogène des phases microcristallines d'oxycarbure d'aluminium, d'oxynitrure d'aluminium et d'oxycarbonitrure d'aluminium.

4. Matériau, selon revendication 3, caractérisé en ce que la phase oxycarbure d'aluminium est essentiellement constituée d'$Al_2OC$.

5. Procédé de préparation d'un matériau polyphasé, à base d'alumine, selon l'une quelconque des revendications 1 à 4, caractérisé en ce que l'on introduit, dans un bain d'alumine en fusion, un réducteur carboné et de l'azote, et que l'on refroidit le produit de réaction à une vitesse au moins égale à 50°C par minute, et de préférence supérieure à 100°C par minute.

6. Procédé, selon revendication 5, caractérisé en ce que le carbone est introduit dans le bain d'alumine sous forme d'un produit choisi parmi les carbones à faible réactivité tels que coke ou graphite, et le carbure d'aluminium.

7. Procédé selon revendication 5, caractérisé en ce que l'azote est introduit dans le bain sous forme d'un produit choisi parmi l'azote gazeux et le nitrure d'aluminium.

8. Procédé selon revendication 6 ou 7 caractérisé en ce que le bain d'alumine en fusion est produit dans un four électrique à arc et en ce que le carbone et/ou l'azote sont introduits dans le bain d'alumine au travers d'au moins une des électrodes du four, munie d'un canal axial.

9. Procédé, selon l'une quelconque des revendications 6 à 8, caractérisé en ce que le bain d'alumine fondue est obtenu par un moyen choisi parmi la fusion d'alumine pure et la fusion réductrice de bauxite.

10. Application du produit polyphasé selon l'une quelconque des revendications 1 à 4, à la confection d'abrasifs ayant un coefficient d'abrasion supérieur à celui du corindon-zircone à 25% de $ZrO_2$.

11. Application du produit polyphasé selon l'une quelconque des revendications 1 à 4, à la confection de produits réfractaires ayant un point de fluage sous charge au moins égal à 1650°C, une résistance élevée au choc thermique et à la corrosion par la fonte et les laitiers associé.